# FASCICULE DE BREVET EUROPEEN

(11) **EP 0 894 430 B1**
(45) Date de publication et mention de la délivrance du brevet: **29.01.2003**
(21) Numéro de dépôt: 98401933.1
(22) Date de dépôt: 29.07.1998
(51) Int. Cl.: A01K 7/02

(54) **Abreuvoir extérieur à niveau constant hors gel**
FrostsichereTränke mit gleichbleibendem Flüssigkeitsstand zur Aussenverwendung
Non-freezing drinker with constant liquid level for outside use.

(30) Priorité: 29.07.1997 FR 9709620
(43) Date de publication de la demande: 03.02.1999
(73) Titulaire: La Buvette, 08090 Tournes (FR)
(72) Inventeur: Gustin, Jean-Pierre, 08000 Charleville-Mezieres (FR)
(74) Mandataire: Loyer, Bertrand

(56) Documents cités:
- DE-A- 3 715 306
- DE-B- 1 030 097
- FR-A- 2 338 623

## Description

La présente invention est relative à un abreuvoir pour le bétail qui est à niveau constant et hors gel.

Il est connu du Certificat d'Utilité français n° 2.338.623 un abreuvoir comportant un caisson à parois calorifugées dans lequel est disposé un élément chauffant et dont la paroi supérieure est fermée par un élément constituant un bac d'abreuvement. Un tel abreuvoir n'est pas assez efficace par temps froid.

Dans la demande de brevet européen EP 0 752 206 du 3 juillet 1996, on a décrit un abreuvoir, destiné à être placé en plein air, qui comporte des moyens de chauffage qui permettent de fournir au bétail une eau tiède même par temps très froid. Un tel abreuvoir ne peut pas être à niveau constant parce que l'eau serait en permanence exposée à la température extérieure et ainsi constamment refroidie. En conséquence l'abreuvoir décrit au brevet EP 0 752 206 comporte une pluralité de bols, chacun muni d'une palette actionnée par l'animal pour remplir le bol à partir d'un réservoir central comportant de l'eau chauffée par une résistance électrique. Un tel abreuvoir est cher parce qu'il nécessite autant de robinetteries qu'il y a de bols et consomme beaucoup d'électricité, environ 3000 Watts.

Dans la demande de brevet européen EP 0 753 250 du 12 juillet 1996 on a décrit un dispositif beaucoup moins onéreux qui est un bac isotherme, sans moyen de chauffage.

Il s'avère cependant nécessaire d'avoir dans certains cas des abreuvoirs comportant un bac d'abreuvement assez important pour que plusieurs animaux puissent s'abreuver simultanément, qui soit à niveau constant, mais qui soit hors gel sans que cela n'entraîne une consommation d'électricité importante.

La présente invention est relative à un tel abreuvoir.

L'abreuvoir selon l'invention est un abreuvoir à bac ouvert dans lequel une réserve d'eau est maintenue à un niveau constant au moyen d'une robinetterie à flotteur, constitué par la superposition d'un support creux isolant, d'un volume étanche rempli d'air chauffé et d'un volume ouvert à l'air libre rempli d'eau à un niveau constant et constituant le bac d'abreuvement caractérisé en ce que la paroi latérale du bac d'abreuvement est double de façon à ménager un espace entre la paroi interne et la paroi externe, cet espace communiquant avec l'espace rempli d'air chaud de telle sorte que le bac ait son fond et ses côtés entourés d'air chaud, et en ce que la paroi interne du bac comporte un renflement définissant un volume dans lequel est disposée la conduite d'arrivée d'eau.

Selon un mode préférentiel de réalisation de l'invention la paroi supérieure du support et les parois du bac sont conformées de façon à définir entre elles un volume très enveloppant, bien que pouvant être réduit, étanche, également rempli d'air, dans lequel sont placés les moyens de chauffage de telle sorte que l'abreuvoir est constitué par l'empilement de trois volumes : le volume rempli d'air du support creux ; le volume rempli d'air chauffé situé entre le support creux et le bac d'abreuvement ; le volume rempli d'eau du bac.

Grâce à cette disposition on obtient un bac d'abreuvement à niveau constant permettant de disposer à l'air libre une quantité d'eau de 40 litres, qui demeure hors gel jusqu'à une température de - 35° tout en ne consommant que 100 Watts.

A titre d'exemple non limitatif et pour faciliter la compréhension de l'invention on a représenté aux dessins annexés :

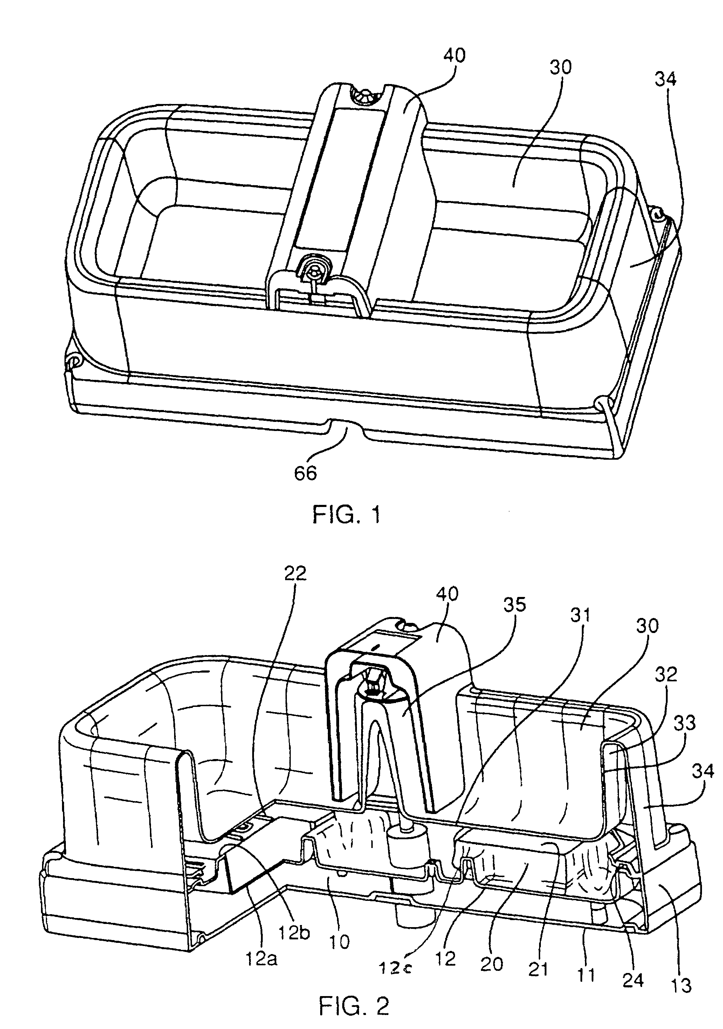

Figure 1, une vue par dessus, en perspective, d'un exemple de réalisation de l'invention ;
Figure 2, une vue par dessus, en perspective, avec arraché partiel du dispositif de la figure 1 ;
Figure 3, une vue en perspective en coupe transversale du dispositif des figures 1 et 2;
Figure 4, une vue en élévation latérale, en coupe transversale du dispositif des figures 1 à 3 posé sur un socle en béton,
Figure 5 et 6, des vues en perspective de face et de dessus, avec arraché partiel, d'une variante de réalisation de l'invention.

En se reportant à ces figures on voit que l'abreuvoir selon l'invention comporte un support creux 10 sur lequel est posé un bac 30.

Le support creux 10 est constitué par une paroi inférieure 11, une paroi supérieure 12, et une paroi latérale 13, ces parois définissant un volume fermé, rempli d'air. La partie centrale 12a de la paroi supérieure 12 est à un niveau inférieur à celui de son rebord 12b et comporte plusieurs bossages tels que 12c.

Le bac 30 comporte une partie centrale 31 et un rebord périphérique qui est constitué en repliant sur elle-même la paroi du bac de façon à définir un espace 32 compris entre deux parois 33 et 34. La paroi 34 repose sur le rebord 12b du support creux 10.

De préférence, comme cela est représenté, la paroi 34 est un peu plus grande que la paroi 33 de sorte que le fond 31 du bac est un peu surélevé par rapport à ses bords.

La formation des parois du support 10 et du bac 30 ménage un volume creux 20 entre les deux. Ce volume 20 communique avec l'espace 32 qui entoure la cuve du bac 30. Des bossages 12c mentionnés précédemment font saillie dans le volume 20 et portent des plaques chauffantes 21, chauffées par des résistances 22. A l'intérieur du volume 20 sont également disposés les moyens de connexion électriques 23. La hauteur des bossages 12c est déterminée de façon que les plaques chauffantes 21 ne soient pas en contact avec la paroi 31 du fond du bac 30 mais à une distance d'environ 1 cm.

La paroi latérale interne 33 du bac 30 est constituée de façon à comporter un renflement 35 à l'intérieur duquel est disposée la canalisation 36 qui amène l'eau à la robinetterie 37 associée de façon connue à un flotteur 38.

De préférence, le support 10 et le bac 30 sont rectangulaires ; le renflement 35 est disposé au milieu du grand côté du rectangle et le couvercle 40 s'étend sur toute la largeur du bac de façon à protéger la robinetterie 37 et le flotteur 38 tout en séparant la cuve d'abreuvement en deux parties.

Le fond 31 du bac 30 étant à proximité des plaques chauffantes 21 est chauffé par celles-ci. De plus, l'air se trouvant dans le volume 20 qui est clos est également chauffé par lesdites plaques 21 et, comme ce volume 20 communique avec le volume 32 il en résulte que la cuve d'abreuvement du bac 30 est entièrement entourée d'air chaud.

Le chauffage par rayonnement direct des plaques 21 et par l'enveloppement d'air chaud permet avec une puissance très faible, de 100 Watts, de maintenir hors gel une quantité de 40 litres d'eau jusqu'à des températures de l'ordre de - 35°.

De préférence, un joint d'étanchéité 24 est disposé entre le bac 30 et le support 10 de façon que le volume 20 soit étanche et qu'il n'y ait pas de fuites d'air chaud.

Le volume d'air se trouvant à l'intérieur du support creux a pour fonction d'isoler le volume d'air chaud 20. Ce volume d'air peut avantageusement être remplacé par un isolant tel que de la mousse de polyuréthanne.

L'abreuvoir ainsi décrit peut être posé à même le sol ou sur un support bétonné (aire paillée).

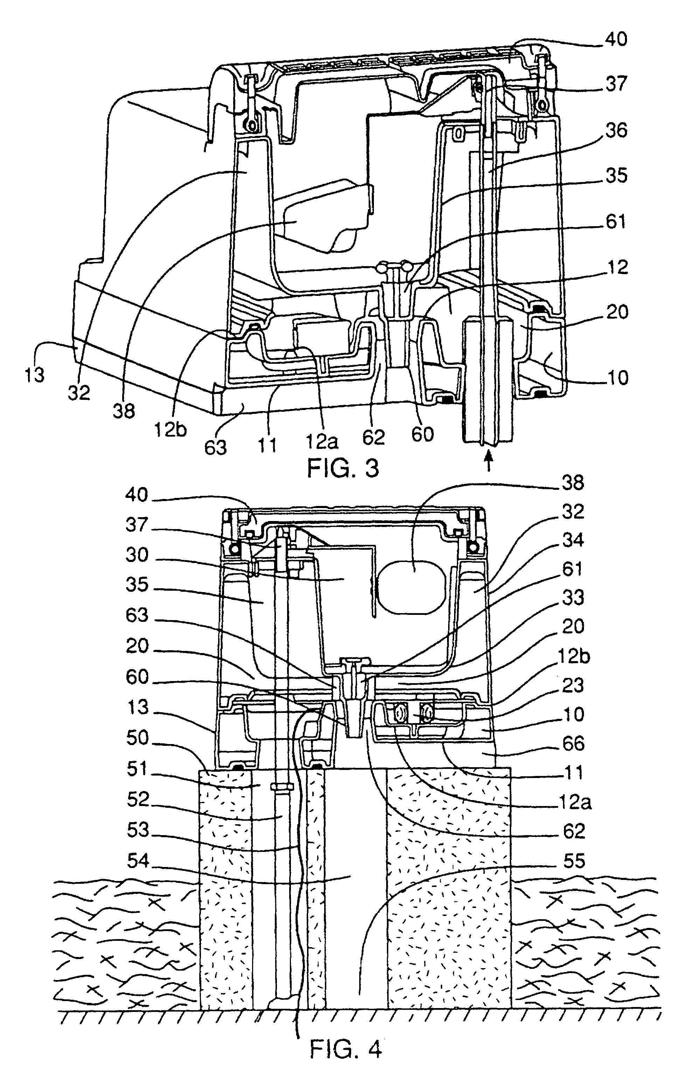

Comme représenté à la figure 4 ce support peut être un socle en béton 50.

De préférence ce socle 50 comporte un perçage 51 qui est traversé par la canalisation d'alimentation en eau 52 et le câble d'alimentation électrique 53.

Le défaut usuel des bacs d'abreuvement à niveau constant est que l'eau qu'ils contiennent est très rapidement polluée par la bave des animaux et les détritus de nourriture qui sont collés à leurs babines. Il faut donc très fréquemment les vider pour les nettoyer.

Afin de permettre la vidange de l'eau se trouvant dans le bas 30, on a disposé dans le fond 31 dudit bac 30 une goulotte d'évacuation 60 munie d'un bouchon 61.

Cette goulotte 60 traverse un conduit 62 conformé dans les parois 11 et 12 du support 10 et un joint d'étanchéité cylindrique 63, entourant la goulotte 60 est interposé entre le bac 30 et le support 10 de façon à assurer l'étanchéité du volume d'air chaud 20.

Le conduit 62 peut communiquer vers l'extérieur par un conduit latéral 66 ménagé dans le support 10 ou dans une conduite 54 traversant le socle en béton 50 vers un puisard 55.

Les dimensions de la goulotte 60 et du conduit latéral 66 sont telles qu'il est possible d'emmancher sur ladite goulotte 60 une canalisation souple arrivant par le conduit latéral 66 afin d'éviter que, comme c'est le cas dans les dispositifs connus, l'eau polluée soit évacuée à même le sol environnant l'abreuvoir, cette eau venant mouiller l'aire paillée qui entoure l'abreuvoir et détremper le sol sur lequel les animaux viennent piétiner.

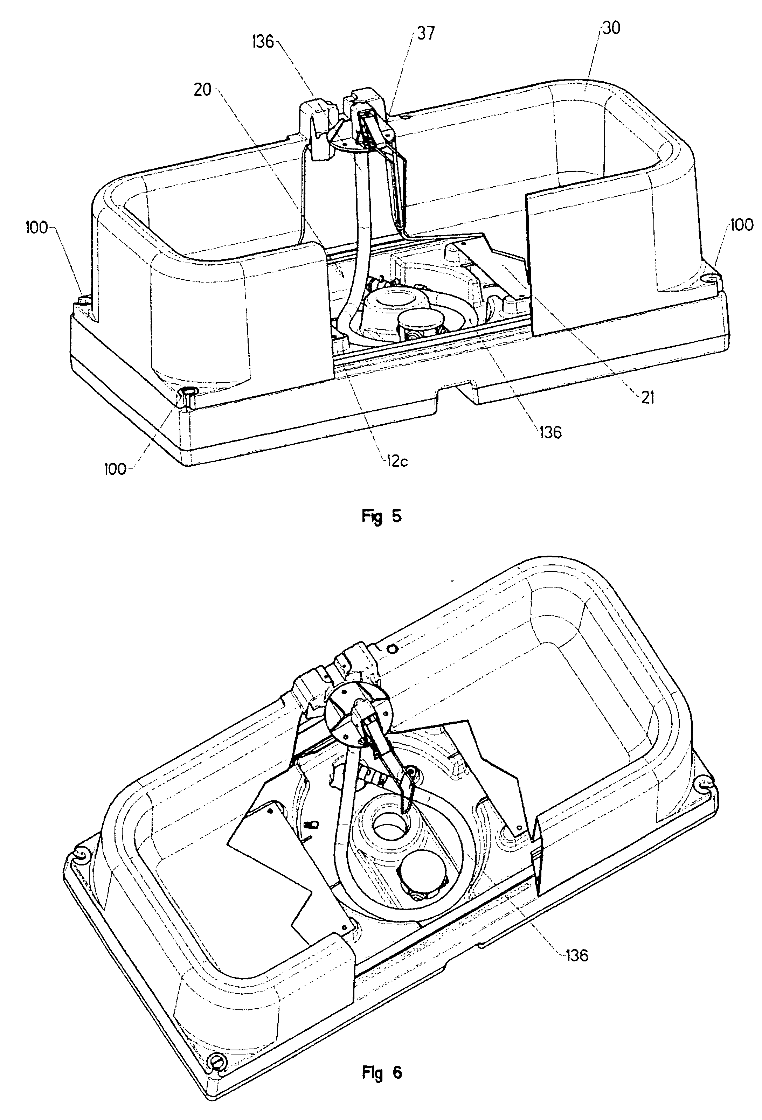

Suivant un mode de réalisation préféré, et comme représenté aux figures 5 et 6, la canalisation 136 qui amène l'eau à la robinetterie est constituée par une tubulure flexible qui est disposée à l'intérieur du volume étanche 20 en décrivant par exemple un cercle ou un arc de cercle. La longueur de cette tubulure peut être de l'ordre de 30 centimètres.

Par cette disposition, l'eau contenue dans la tubulure flexible a le temps de se réchauffer entre deux remplissages du bac 30. Cette eau réchauffée communique de la chaleur en direction de la robinetterie 37 et de la canalisation d'amenée d'eau ce qui contribue à la mise bars gel de la canalisation et de la robinetterie.

Cette disposition est également avantageuse en ce qu'elle permet, lorsqu'il faut intervenir dace le volume étanche 20, d'ouvrir l'abreuvoir en enlevant simplement les moyens de fixation 100 sans avoir à désaccoupler la canalisation 136 du fait que la tubulure flexible peut se déformer et permettre la séparation du bac 30 et du support creux 10.

Le dispositif ainsi décrit comporte donc la superposition d'un volume étanche isolant 10, qui peut être rempli soit d'air, soit d'une matière isolante ; d'un volume étanche 20 rempli d'air chaud ; et d'un volume 30, ouvert à l'air libre, rempli d'une quantité constante d'eau.

## Revendications

1. Abreuvoir à bac ouvert dans lequel une réserve d'eau est maintenue à un niveau constant au moyen d'une robinetterie à flotteur (37, 38), constitué par la superposition d'un support creux (10) isolant, d'un volume étanche (20) rempli d'air chauffé et d'un volume ouvert à l'air libre (30) rempli d'eau à un niveau constant et constituant le bac d'abreuvement, **caractérisé en ce que** la paroi latérale du bac d'abreuvement (30) est double de façon à ménager un espace (32) entre la paroi interne (33) et la paroi externe (34), cet espace (32) communiquant avec l'espace (20) rempli d'air chaud de telle sorte que le bac (30) ait son fond et ses côtés entourés d'air chaud, et **en ce que** la paroi interne (33) du bac (30) comporte un renflement (35) définissant un volume dans lequel est disposée la conduite d'arrivée d'eau (26, 136).

2. Abreuvoir selon la revendication 1, **caractérisé en ce que** le volume ouvert à l'air libre (30) comporte une partie centrale (31) constituant le bac d'abreuvement et un rebord périphérique définissant l'espace (32) entre la paroi interne (33) et la paroi externe (34).

3. Abreuvoir selon la revendication 1 ou selon la revendication 2, **caractérisé en ce que** la partie centrale (12a) de la paroi supérieure (12) du support creux (10) est à un niveau inférieur à celui de son rebord (12b) et la paroi (34) du bac (30) est plus grande que la paroi latérale interne (33) et repose sur le rebord (12b) du support creux (10) pour ménager entre ledit support creux (10) et la partie centrale (31) du bac (30) un volume étanche (20) communiquant avec l'espace (32), compris entre les deux parois du bac (30).

4. Abreuvoir selon l'une quelconque des revendications 1 à 3, **caractérisé en ce que** des moyens de chauffage électriques (21) sont positionnés dans ledit volume étanche (20), lesdits moyens de chauffage électriques (21) étant placés à faible distance du fond (31) du bac (30) de façon que ce dernier soit chauffé à la fois par rayonnement et par air chaud.

5. Abreuvoir selon l'une quelconque des revendications 1 à 4, dans lequel la conduite (136) d'arrivée d'eau est constituée par une tubulure flexible qui est disposée à l'intérieur du volume étanche (20) en décrivant par exemple un cercle ou un arc de cercle.

6. Abreuvoir selon l'une quelconque des revendications 1 à 5, dans lequel la robinetterie (37) commandée par un flotteur (38), ainsi que ledit flotteur (38) sont protégés par un couvercle (40).

7. Abreuvoir selon la revendication 6, dans lequel le couvercle de protection (40) est disposé en travers du bac (30) au milieu de celui-ci.

8. Abreuvoir selon l'une quelconque des revendications précédentes dans lequel le volume du support creux (10) est rempli soit d'air, soit d'une matière isolante.

9. Abreuvoir selon l'une quelconque des revendications 1 à 8 dans lequel le bac d'abreuvement (30) comporte une goulotte de vidange (60) qui traverse de façon étanche le volume d'air chaud (20) et débouche à l'extérieur par une goulotte directe (62) ou une canalisation latérale (66).

10. Abreuvoir selon l'une quelconque des revendications précédentes **caractérisé par le fait qu'**il est disposé sur un socle (50) comportant une canalisation (51) livrant passage à l'alimentation en eau (52) ou en électricité (53) et une autre canalisation (54) communiquant d'une part avec la goulotte de vidange (62) et un puisard (55).

## Patentansprüche

1. Tränke mit offenem Behälter, in welcher der Pegel eines Wasservorrates mittels Schwimmerarmaturen (37, 38) konstant gehalten wird, die dadurch gebildet ist, daß ein hohler, isolierender Träger (10), ein dichter Raum (20), der mit erwärmter Luft gefüllt ist, und ein zur Außenluft hin offener Raum (30), der mit Wasser bei einem konstanten Pegel gefüllt ist und den Tränkbehälter bildet, übereinander angeordnet sind, **dadurch gekennzeichnet, daß** die Seitenwand des Tränkbehälters (30) doppelt ausgebildet ist, um so einen Raum (32) zwischen der Innenwand (33) und der Außenwand (34) zu bilden, wobei dieser Raum (32) in Verbindung mit dem Raum (20) steht, der mit warmer Luft gefüllt ist, so daß der Boden und die Seiten des Behälters (30) von warmer Luft umgeben sind, und daß die Innenwand (33) des Behälters (30) eine Ausbuchtung (35) aufweist, die einen Raum festlegt, in dem die Wasserzuführleitung (26, 136) angeordnet ist.

2. Tränke nach Anspruch 1, **dadurch gekennzeichnet, daß** der zur Außenluft hin offene Raum (30) ein Mittelteil (31), das den Tränkbehälter bildet, und einen Rand umfaßt, der den Raum (32) zwischen der Innenwand (33) und der Außenwand (34) bildet.

3. Tränke nach Anspruch 1 oder nach Anspruch 2, **dadurch gekennzeichnet, daß** sich das Mittelteil (12a) der oberen Wand (12) des hohlen Trägers (10) auf einem niedrigeren Niveau befindet als dessen Rand (12b) und daß die Wand (34) des Behälters (30) größer als die Innenseitenwand (33) ist und auf dem Rand (12b) des hohlen Trägers (10) aufliegt, um zwischen dem hohlen Träger (10) und dem Mittelteil (31) des Behälters (30) einen dichten Raum (20) zu bilden, der mit dem Raum (32) verbunden ist, der zwischen den beiden Wänden des Behälters (30) eingeschlossen ist.

4. Tränke nach einem der Ansprüche 1 bis 3, **dadurch gekennzeichnet, daß** in dem dichten Raum (20) elektrische Heizmittel (21) angeordnet sind, die nahe dem Boden (31) des Behälters (30) angebracht sind, so daß dieser letztere gleichzeitig mittels Strahlung und Heißluft beheizt wird.

5. Tränke nach einem der Ansprüche 1 bis 4, bei der die Wasserzuführleitung (136) aus einem biegsamen Rohransatz gebildet ist, der im Inneren des dichten Raumes (20) so angeordnet ist, daß er z. B. einen Kreis oder einen Kreisbogen beschreibt.

6. Tränke nach einem der vorhergehenden Ansprüche 1 bis 5, bei der die durch einen Schwimmer (38) gesteuerten Armaturen (37) sowie der Schwimmer (38) durch eine Abdeckung (40) geschützt sind.

7. Tränke nach Anspruch 6, bei der die Schutzabdeckung (40) quer zum Behälter (30) in dessen Mitte angeordnet ist.

8. Tränke nach einem der vorhergehenden Ansprüche, bei welcher der Innenraum des hohlen Trägers (10) mit Luft oder einem Isoliermaterial gefüllt ist.

9. Tränke nach einem der Ansprüche 1 bis 8, bei der der Tränkbehälter (30) eine Ablaufrinne (60) umfaßt, die abgedichtet durch das Heißluftvolumen (20) läuft und über einen direkten Ablauf (62) oder einen seitlichen Kanal (66) nach außen mündet.

10. Tränke nach einem der vorhergehenden Ansprüche, **dadurch gekennzeichnet, daß** sie auf einem Sockel (50) angeordnet ist, der einen Kanal (51), welcher einen Durchlaß zur Versorgung mit Wasser (52) oder Elektrizität (53) liefert, und einen anderen Kanal (54) umfaßt, der einerseits mit der Ablaufrinne (62) und andererseits mit einer Sickergrube (55) verbunden ist.

## Claims

1. A waterer comprising an open bowl in which a supply of water is maintained at a constant level by means of a float valve (37, 38), formed by the superimposition of an insulating hollow support (10), a sealed space (20) filled with heated air, and a space (30) open to the air filled with water to a constant level and forming the drinking bowl, **characterised in that** the side wall of the drinking bowl (30) is double-walled so as to provide a space (32) between the inner wall (33) and the outer wall (34), this space (32) communicating with the space (20) filled with hot air so that the bottom and the sides of the bowl (30) are surrounded by hot air, and **in that** the inner wall (33) of the bowl (30) comprises a boss (35) defining a space in which the water inlet pipe (26, 136) is arranged.

2. A waterer according to claim 1, **characterised in that** the space (30) open to the air comprises a central portion (31) forming the drinking bowl and a peripheral edge defining the space (32) between the inner wall (33) and the outer wall (34).

3. A waterer according to claim 1 or according to claim 2, **characterised in that** the central portion (12a) of the upper wall (12) of the hollow support (10) is at a lower level than its edge (12b), and the wall (34) of the bowl (30) is larger than the inner side wall (33) and rests on the edge (12b) of the hollow support (10) so as to form, between the said hollow support (10) and the central portion (31) of the bowl (30), a sealed space (20) communicating with the space (32) formed between the two walls of the bowl (30).

4. A waterer according to any one of claims 1 to 3, **characterised in that** electric heating means (21) are arranged in the said sealed space (20), the said electric heating means (21) being located a short distance from the bottom (31) of the bowl (30) so that the latter is heated simultaneously by radiation and by hot air.

5. A waterer according to any one of claims 1 to 4, wherein the water inlet pipe (136) is formed by a flexible tube arranged inside the sealed space (20) and describing e.g. a circle or an arc.

6. A waterer according to any one of claims 1 to 5, wherein the valve (37) controlled by a float (38) and also the said float (38) are protected by a cover (40).

7. A waterer according to claim 6, wherein the protective cover (40) is arranged across the middle of the bowl (30).

8. A waterer according to any one of the preceding claims, wherein the space inside the hollow support (10) is filled either with air or with an insulating material.

9. A waterer according to any one of claims 1 to 8, wherein the drinking bowl (30) comprises a drainage channel (60) which extends through the volume of hot air (20) in a sealed manner and opens on the outside via a direct channel (62) or a lateral pipe (66).

10. A waterer according to any one of the preceding claims, **characterised in that** it is arranged on a base (50) comprising a pipe (51) for a water supply (52) or an electricity supply (53) and a further pipe (54) communicating with the drainage channel (62) and a catch basin (55).
